# FASCICULE DE BREVET EUROPEEN

(11) **EP 1 199 621 B1**
(45) Date de publication et mention de la délivrance du brevet: **10.05.2006**
(21) Numéro de dépôt: 01402530.8
(22) Date de dépôt: 01.10.2001
(51) Int. Cl.: G05D 23/19

(54) **Procédé de régulation de la température dans un four de cuisson électrique**
Temperaturregelverfahren in einem Elektrobackofen
Temperature regulation process in an electric cooking oven

(30) Priorité: 02.10.2000 FR 0012519
(43) Date de publication de la demande: 24.04.2002
(73) Titulaire: Brandt Industries, 92500 Rueil Malmaison (FR)
(72) Inventeur: Raimond, Sylvain, 45000 Orléans (FR); Merienne, Jean-Marie, 41600 Lamotte Beuvron (FR)
(74) Mandataire: Santarelli

(56) Documents cités:
- EP-A- 0 945 773
- EP-A- 1 093 043
- US-A- 6 018 150

## Description

La présente invention concerne un procédé de régulation de la température dans une enceinte de cuisson.

Elle concerne également un four de cuisson électrique adapté à mettre en oeuvre ce procédé de régulation.

Dans un four de cuisson traditionnel, la température est régulée électroniquement au moyen d'une sonde placée directement dans l'enceinte de cuisson ou cavité du four.

Cependant, les mesures réalisées par cette sonde peuvent être influencées par le milieu ambiant, en fonction de la position de la sonde ou du type de cuisson mis en oeuvre dans le four.

En particulier, cette sonde peut être sensible au rayonnement infrarouge émis par des éléments chauffants électriques, à la vapeur d'eau présente dans l'enceinte de cuisson, ou à une circulation d'air importante, notamment lors d'une cuisson traditionnelle pulsée.

La mesure ainsi réalisée par la sonde de température peut donner une image faussée de la température réelle de l'enceinte de cuisson, ce qui fausse la régulation de la température et peut entraîner une détérioration de la qualité de la cuisson.

Un tel procédé de régulation utilisant la mesure de la température de l'enceinte de cuisson est décrit dans le document US 6 018 150.

La présente invention a pour but de proposer un procédé de régulation permettant de résoudre les inconvénients précités et de réguler la température dans une enceinte de cuisson en tenant compte des caractéristiques thermiques de l'appareil.

A cet effet, un procédé de régulation de la température dans une enceinte de cuisson comprenant au moins un élément chauffant électrique, comprend les étapes suivantes :
- acquisition d'une température de consigne pour l'enceinte de cuisson ; et
- mise en oeuvre d'un cycle de fonctionnement de l'élément chauffant, choisi parmi des cycles de fonctionnement prédéterminés en fonction de la température de consigne et de la puissance moyenne fournie par ledit élément chauffant, les cycles de fonctionnement prédéterminés comprenant une phase de régulation dans laquelle l'élément chauffant est mis en marche périodiquement, pendant une durée constante préfixée.

Ainsi, la régulation de la température est réalisée à partir d'un cycle de fonctionnement déterminé au préalable, qui prend en compte les caractéristiques thermiques de l'appareil, et notamment la puissance moyenne fournie par l'élément chauffant au cours du temps.

On peut ainsi piloter la puissance injectée à l'intérieur de l'enceinte de cuisson en fonction du temps et à partir de la température de consigne désirée dans l'enceinte de cuisson et réguler la puissance fournie dans l'enceinte du four par l'élément chauffant en alternant des périodes de marche et des périodes d'arrêt de cet élément chauffant.

Ce cycle de fonctionnement permet dans une phase de régulation de maintenir la température dans l'enceinte de cuisson autour d'une valeur de consigne fixée.

Selon une autre caractéristique préférée de l'invention, les cycles de fonctionnement prédéterminés comprennent une phase de préchauffage dans laquelle l'élément chauffant fonctionne en continu pendant une durée constante fixée en fonction de la température de consigne.

On peut ainsi paramétrer pour le cycle de fonctionnement, la durée nécessaire de préchauffage pendant laquelle l'élément chauffant fonctionne en continu de manière à atteindre dans l'enceinte du four la température de consigne fixée.

La régulation de la température dans l'enceinte du four est donc réalisée à partir du temps du fonctionnement de l'élément chauffant et non plus à partir de la valeur fournie par une sonde de température qui peut éventuellement être erronée selon sa position dans l'enceinte de cuisson.

Selon une autre caractéristique préférée de l'invention, le procédé de régulation comprend en outre une étape de choix d'un type de cuisson dans l'enceinte de cuisson, et les cycles de fonctionnement sont prédéterminés en fonction de la température de consigne, du type de cuisson choisi et de la puissance moyenne fournie par un ou plusieurs éléments chauffants associés au type de cuisson choisi.

Ainsi, lors de la régulation de la température, le cycle de fonctionnement est paramétré également en fonction du type de cuisson choisi.

En effet, dans une enceinte de cuisson, selon le type de cuisson choisi, un ou plusieurs des éléments chauffants peuvent fonctionner pendant cette cuisson, ce qui modifie la puissance moyenne injectée dans l'enceinte de cuisson au cours du fonctionnement de l'appareil.

En outre, un ventilateur peut être mis en marche dans un type de cuisson traditionnelle pulsée.

Ces paramètres modifient le comportement de l'enceinte de cuisson et la montée en température dans cette dernière.

Le procédé de régulation conforme à ce mode de réalisation de invention permet ainsi de prendre en compte ces différents paramètres associés au type de cuisson mis en oeuvre.

Selon un autre aspect de l'invention, un four de cuisson électrique comprend une enceinte de cuisson et au moins un élément chauffant électrique adapté à chauffer l'enceinte de cuisson.

Conformément à l'invention, le fonctionnement de l'élément chauffant électrique est régulé selon le procédé de régulation conforme au premier aspect de l'invention.

Ce four de cuisson électrique présente des avantages et caractéristiques analogues à ceux décrits pour le procédé de régulation.

En particulier, la température à l'intérieur de l'enceinte de cuisson peut être régulée uniquement à partir des caractéristiques thermiques et des caractéristiques de fonctionnement de l'appareil de cuisson.

Cette régulation n'est en particulier pas influencée par le milieu ambiant.

D'autres particularités et avantages de l'invention apparaîtront dans la description ci-après.

Aux dessins annexés, donnés à titre d'exemples non limitatifs :
- la figure 1 est un schéma bloc illustrant un four de cuisson adapté à mette en oeuvre le procédé de régulation conforme à l'invention ; et
- la figure 2 est une représentation graphique illustrant un cycle de fonctionnement d'un élément chauffant selon le procédé de régulation conforme à l'invention.

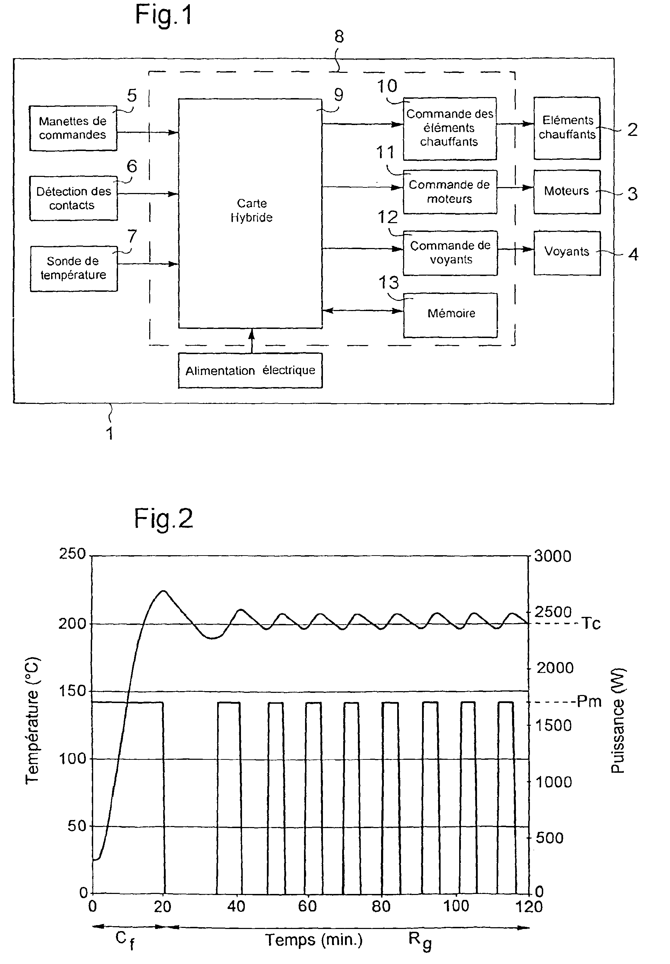

On va décrire tout d'abord, en référence à la figure 1, un four de cuisson électrique adapté à mettre en oeuvre le procédé de régulation conforme à l'invention.

Ce four de cuisson 1 comprend de manière connue des éléments chauffants électriques 2 permettant de chauffer l'intérieur d'une enceinte de cuisson.

Ces éléments chauffants électriques 2 sont constitués généralement de résistances électriques à rayonnement infrarouge.

De manière classique, dans un four de cuisson, une première résistance électrique est disposée dans la partie supérieure de l'enceinte de cuisson, de manière apparente.

Une seconde résistance électrique est également disposée dans la partie inférieure du four, sous la sole de l'enceinte de cuisson.

Le four de cuisson comporte également généralement au moins un moteur 3 permettant de mettre en marche un ventilateur adapté à pulser de l'air dans l'enceinte de cuisson afin d'uniformiser la température à l'intérieur de cette enceinte de cuisson.

Des voyants lumineux 4 équipent également le four de cuisson.

Ces voyants permettent notamment d'indiquer à l'utilisateur la mise en marche du four de cuisson et la fin de la phase de préchauffage.

Des manettes de commande 5 permettent à l'utilisateur de mettre en fonctionnement le four et de choisir un type de cuisson et la température de consigne souhaitée à l'intérieur de l'enceinte de cuisson du four.

Des moyens de détection des contacts 6 permettent en outre de n'autoriser le fonctionnement à 350°C du four (fonction pyrolyse) que si la porte est correctement fermée et verrouillée.

Une sonde de température 7 est également prévue à l'intérieur de l'enceinte du four.

Comme cela sera décrit ultérieurement, cette sonde de température ne participe pas à la régulation de la température dans l'enceinte de cuisson.

Cette sonde de température a une fonction de limiteur thermique, permettant de couper le fonctionnement de l'appareil lorsque la température à l'intérieur de l'enceinte de cuisson dépasse une température normale d'utilisation, par exemple au-delà de 320°C.

L'ensemble de la gestion électronique du four est schématisé dans le bloc référencé 8 à la figure 1.

Généralement, une carte électronique 9 permet de commander le fonctionnement des différents sous-ensembles du four.

Elle permet notamment de gérer la commande 10 des éléments chauffants 2, la commande 11 des moteurs 3 et la commande 12 des voyants lumineux 4.

Une mémoire 13, du type mémoire EEPROM, permet de mémoriser différents cycles de fonctionnement de l'appareil conformément à l'invention.

On va décrire à présent comment sont déterminés les cycles de fonctionnement de l'appareil pour être mémorisés dans la mémoire 13 de la gestion électronique 8 du four 1.

Pour connaître les caractéristiques thermiques du four concerné 1, il est nécessaire de rechercher la réponse indicielle, c'est-à-dire le signal de température à l'intérieur de l'enceinte de cuisson, lorsque ce four est vide, pour une puissance injectée déterminée et pour un type de cuisson fixé.

On peut facilement, en injectant un échelon de puissance prédéterminé dans l'enceinte de cuisson, observer la montée en température de l'enceinte à vide de manière à obtenir la réponse indicielle du four pour un type de cuisson prédéterminé.

En dérivant la réponse indicielle, on obtient la réponse impulsionnelle Rᵢₘₚ du four. Comme la réponse indicielle est égale ici au signal de température, on a : Rᵢₘₚ = f (signal de température) où f est la fonction de transfert thermique du four.

A partir de cette fonction de transfert thermique, il est possible, à partir de n'importe quelle valeur de puissance injectée, de connaître la température à l'intérieur du four obtenue en fonction du temps.

Selon le type de cuisson choisi, la puissance moyenne fournie à l'intérieur de l'enceinte de cuisson peut varier.

De manière classique, le type de cuisson peut être choisi parmi une cuisson traditionnelle, une cuisson traditionnelle pulsée, une cuisson au grill ou une cuisson de sole.

Dans la cuisson traditionnelle, tous les éléments chauffants du four fonctionnent simultanément, et en particulier la résistance électrique supérieure et la résistance électrique inférieure dite résistance électrique de sole.

Dans la cuisson traditionnelle pulsée, le ventilateur est mis en marche afin de brasser l'air à l'intérieur de l'enceinte de cuisson et d'uniformiser la température de celle-ci.

Dans une cuisson grill, seule la résistance électrique supérieure apparente fonctionne.

En revanche, dans la cuisson de sole, seule la résistance électrique de sole fonctionne.

La température de consigne à l'intérieur du four peut typiquement être comprise entre 50°C et 275°C.

Grâce à la fonction de transfert thermique déterminée pour le four, on peut créer une table de correspondance permettant d'associer à chaque type de cuisson et pour chaque température de consigne, un cycle de fonctionnement à partir duquel sera régulé le fonctionnement du ou des éléments chauffants mis en oeuvre lors du cycle de cuisson.

Chaque cycle de fonctionnement prédéterminé comprend une phase de préchauffage dans laquelle tous les éléments chauffants du four fonctionnent en continu, pendant une durée constante qui dépend de la température de consigne souhaitée.

Dans cette phase de préchauffage, la puissance injectée dans l'enceinte de cuisson est la puissance maximale que peut fournir le four de cuisson lorsque tous les éléments chauffants fonctionnent.

Lorsque la température de consigne est atteinte, cette phase de préchauffage est terminée et le cycle de fonctionnement se prolonge par une phase de régulation permettant de maintenir à l'intérieur de l'enceinte de cuisson la température de consigne.

Pendant cette phase de régulation, le ou les éléments chauffants mis en oeuvre selon le type de cuisson choisi, fonctionnent par intermittence.

De préférence, les éléments chauffants sont mis en marche périodiquement pendant une durée constante préfixée.

La périodicité à laquelle l'élément chauffant est mis en marche est déterminée en fonction de la température de consigne et du type de cuisson.

Cette périodicité diminue lorsque la température de consigne diminue.

En effet, lorsque la température dans l'enceinte de cuisson est plus faible, la diminution de température dans la phase de régulation est moins rapide.

Il est donc nécessaire de réactiver moins fréquemment les éléments chauffants.

Un cycle de fonctionnement peut se présenter ainsi à titre d'exemple, pour une régulation à une température de consigne de l'ordre de 200°C :

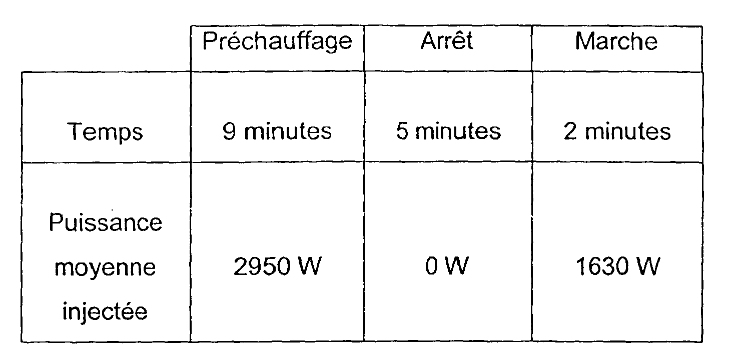

Ainsi, pour un four de cuisson ayant une puissance maximale de l'ordre de 3000 W, la phase de préchauffage, pendant laquelle l'ensemble des éléments chauffants fonctionnent, a une durée de 9 minutes.

Ensuite, pendant la phase de régulation, un élément chauffant est mis en marche périodiquement toutes les 7 minutes.

La durée de fonctionnement de l'élément chauffant est également constante sur chaque période, et ici égale à 2 minutes.

Réciproquement, la durée d'arrêt de cet élément chauffant est de l'ordre de 5 minutes.

Dans l'exemple décrit ici, la puissance injectée dans l'enceinte de cuisson pendant la phase de régulation est sensiblement égale à 1630 W, ce qui correspond par exemple à la mise en marche d'un seul des éléments chauffants équipant le four de cuisson.

La figure 2 illustre également sur une courbe un cycle de fonctionnement permettant de maintenir à l'intérieur de l'enceinte d'un four une température de l'ordre de 200°C.

Dans ce deuxième exemple, les éléments chauffants utilisés lors de la phase de préchauffage Cf et lors de la phase de régulation Rg sont identiques et fournissent une puissance moyenne Pm de l'ordre de 1700 W dans l'enceinte de cuisson.

La phase de préchauffage Cf, d'une durée d'environ 20 minutes, permet d'obtenir une montée en température jusqu'à la température de consigne Tc de 200°C.

La phase de régulation Rg permet ensuite, par fonctionnement par intermittence de l'élément chauffant, de maintenir la température sensiblement égale à 200°C.

Lors de la mise en marche du four, le procédé de régulation de la température comprend tout d'abord une étape d'acquisition d'une température de consigne Tc pour l'enceinte de cuisson.

Une étape de choix permet en outre à l'utilisateur de choisir un type de cuisson parmi l'ensemble des types de cuisson possibles dans le four.

Ensuite, un cycle de fonctionnement de l'élément chauffant est mis en oeuvre.

Ce cycle de fonctionnement est choisi parmi l'ensemble des cycles de fonctionnement mémorisés dans la mémoire 13 en fonction notamment de la température de consigne demandée Tc et du type de cuisson choisi.

La régulation est ainsi réalisée à partir des caractéristiques thermiques du four, ce qui permet de n'apporter que l'énergie nécessaire pour permettre de réguler la température à l'intérieur de l'enceinte de cuisson.

Bien entendu, de nombreuses modifications pourraient être apportées à l'exemple de réalisation décrit ci-dessus sans sortir du cadre de l'invention.

En particulier, si l'appareil de cuisson ne comporte pas différents types de cuisson, les cycles de fonctionnement prédéterminés et mémorisés sont fonction uniquement de la température de consigne demandée et de la puissance moyenne du ou des éléments chauffants de l'appareil.

## Revendications

1. Procédé de régulation de la température dans une enceinte de cuisson comprenant au moins un élément chauffant électrique (2), **caractérisé en ce qu'**il comprend les étapes suivantes :
- acquisition d'une température de consigne (Tc) pour l'enceinte de cuisson ; et
- mise en oeuvre d'un cycle de fonctionnement de l'élément chauffant (2), choisi parmi des cycles de fonctionnement prédéterminés en fonction de la température de consigne (Tc) et de la puissance moyenne (Pm) fournie par ledit élément chauffant (2), les cycles de fonctionnement prédéterminés comprenant une phase de régulation (Rg) dans laquelle l'élément chauffant (2) est mis en marche périodiquement, pendant une durée constante préfixée.

2. Procédé de régulation conforme à la revendication 1, **caractérisé en ce que** la périodicité à laquelle l'élément chauffant (2) est mis en marche est déterminée en fonction de la température de consigne (Tc) et diminue lorsque la température de consigne (Tc) diminue.

3. Procédé de régulation conforme à l'une des revendications 1 ou 2, **caractérisé en ce que** les cycles de fonctionnement prédéterminés comprennent une phase de préchauffage (Cf) dans laquelle l'élément chauffant (2) fonctionne en continu pendant une durée constante préfixée en fonction de la température de consigne.

4. Procédé de régulation conforme à l'une des revendications 1 à 3, **caractérisé en ce qu'**il comprend en outre une étape de choix d'un type de cuisson dans l'enceinte de cuisson, et **en ce que** les cycles de fonctionnement sont prédéterminés en fonction de la température de consigne (Tc), du type de cuisson choisi, et de la puissance moyenne (Pm) fournie par un ou plusieurs éléments chauffants associés au type de cuisson choisi.

5. Procédé de régulation conforme à la revendication 4, **caractérisé en ce que** le type de cuisson est choisi parmi une cuisson traditionnelle, une cuisson traditionnelle pulsée, une cuisson au grill, ou une cuisson de sole.

6. Four de cuisson électrique comprenant une enceinte de cuisson et au moins un élément chauffant électrique (2) adapté à chauffer l'enceinte de cuisson, **caractérisé en ce que** le fonctionnement de l'élément chauffant électrique (2) est régulé selon le procédé de régulation conforme à l'une des revendications 1 à 5.

7. Four de cuisson conforme à la revendication 6, **caractérisé en ce qu'**il comprend des moyens de mémorisation (13) de plusieurs cycles de fonctionnement prédéterminés en fonction d'une température de consigne (Tc), d'un type de cuisson et de la puissance moyenne (Pm) fournie par le ou les éléments chauffants (2), et des moyens de choix (9) d'un cycle de fonctionnement adaptés à choisir un cycle de fonctionnement en fonction de la température de consigne demandée (Tc) et d'un type de cuisson choisi.

## Patentansprüche

1. Verfahren zum Regeln der Temperatur in einem Garraum, mit mindestens einem elektrischen Heizelement (2), **dadurch gekennzeichnet, dass** es folgende Schritte aufweist:
- Erlangung einer Solltemperatur (Tc) für den Garraum, und
- Durchführung eines Betriebszyklus des Heizelements (2), der unter vorbestimmten Betriebszyklen in Abhängigkeit von der Solltemperatur (Tc) und der vom Heizelement (2) abgegebenen mittleren Leistung (Pm) ausgewählt ist, wobei die vorbestimmten Betriebszyklen eine Regulierungsphase (Rg) aufweisen, in welcher das Heizelement (2) periodisch während einer vorab festgelegten konstanten Dauer eingeschaltet ist.

2. Regelverfahren nach Anspruch 1, **dadurch gekennzeichnet, dass** die Periodizität, bei welcher das Heizelement (2) eingeschaltet ist, in Abhängigkeit der Solltemperatur (Tc) bestimmt wird und abnimmt, wenn die Solltemperatur (Tc) sinkt.

3. Regelverfahren nach Anspruch 1 oder 2, **dadurch gekennzeichnet, dass** die vorbestimmten Betriebszyklen eine Vorheizphase (Cf) umfassen, in welcher das Heizelement (2) während einer in Abhängigkeit von der Solltemperatur vorab festgelegten, konstanten Dauer kontinuierlich betrieben wird.

4. Regelverfahren nach einem der Ansprüche 1 bis 3, **dadurch gekennzeichnet, dass** es zudem einen Schritt zum Wählen einer Garart im Garraum umfasst, und dass die Betriebszyklen in Abhängigkeit von der Solltemperatur (Tc) und der gewählten Garart, der von einem oder mehreren, der gewählten Garart zugeordneten Heizelementen abgegebenen mittleren Leistung (Pm) vorbestimmt sind.

5. Regelverfahren nach Anspruch 4, **dadurch gekennzeichnet, dass** die Garart unter einem herkömmlichen Garen, einem pulsierten herkömmlichen Garen, einem Garem mit Grill oder einem Garen mit Herdsohle ausgewählt ist.

6. Elektrischer Garofen mit einem Garraum und mindestens einem elektrischen Heizelement (2), der dazu geeignet ist, den Garraum zu erhitzen, **dadurch gekennzeichnet, dass** der Betrieb des elektrischen Heizelements (2) mittels des Regelverfahrens gemäß einem der Ansprüche 1 bis 5 geregelt wird.

7. Garofen nach Anspruch 6, **dadurch gekennzeichnet, dass** er Mittel (13) zum Speichern mehrerer Betriebszyklen aufweist, die in Abhängigkeit von einer Solltemperatur (Tc), einer Garart und der vom Heizelement (2) abgegebenen mittleren Leistung (Pm) vorbestimmt sind, und Mittel (9) zum Auswählen eines Betriebszyklus, die dazu geeignet sind, einen Betriebszyklus in Abhängigkeit von der geforderten Solltemperatur (Tc) und einer gewählten Garart auszuwählen.

## Claims

1. Method of regulating the temperature in a cooking chamber comprising at least one electric heating element (2), **characterised in that** it comprises the following steps:
- acquiring a set temperature (Tc) for the cooking chamber; and
- implementing an operating cycle for the heating element (2) chosen from amongst operating cycles predetermined according to the set temperature (Tc) and the average power (Pm) supplied by the said heating element (2), the predetermined operating cycles comprising a regulation phase (Rg) in which the heating element (2) is periodically switched on, for a predetermined constant period.

2. Regulation method according to claim 1, **characterised in that** the periodicity at which the heating element (2) is switched on is determined according to the set temperature (Tc) and decreases when the set temperature (Tc) decreases.

3. Regulation method according to one of claims 1 or 2, **characterised in that** the predetermined operating cycles comprise a preheating phase (Cf) in which the heating element (2) functions continuously for a constant period predetermined according to the set temperature.

4. Regulation method according to one of claims 1 to 3, **characterised in that** it also comprises a step of choosing a type of cooking in the cooking chamber, and **in that** the operating cycles are predetermined according to the set temperature (Tc), the type of cooking chosen and the average power (Pm) supplied by one or more heating elements associated with the type of cooking chosen.

5. Regulation method according to claim 4, **characterised in that** the type of cooking is chosen from amongst traditional cooking, pulsed traditional cooking, grilling or bottom heat cooking.

6. Electric cooking oven comprising a cooking chamber and at least one electric heating element (2) able to heat the cooking chamber, **characterised in that** the functioning of the electric heating element (2) is regulated according to the regulation method in accordance with one of claims 1 to 5.

7. Cooking oven according to claim 6, **characterised in that** it comprises means (13) for storing several operating cycles predetermined according to a set temperature (Tc), a type of cooking and the average power (Pm) supplied by the heating element or elements (2), and means (9) for choosing an operating cycle adapted to choose an operating cycle according to the set temperature requested (Tc) and a type of cooking chosen.
